Europäisches Patentamt

European Patent Office

Office européen des brevets

(19)

(11) Publication number : **0 586 018 A1**

(12) **EUROPEAN PATENT APPLICATION**

(21) Application number : 93202571.1

(22) Date of filing : 01.09.93

(51) Int. Cl.$^5$ : **B01D 53/22, B01D 71/52**

(30) Priority : 04.09.92 NL 9201552

(43) Date of publication of application :
09.03.94 Bulletin 94/10

(84) Designated Contracting States :
**BE DE ES FR GB IT NL**

(71) Applicant : **DELAIR DROOGTECHNIEK EN LUCHTBEHANDELING B.V.**
**Oude Kerkstraat 2, P.O. Box 570**
**NL-4870 AN Etten-Leur (NL)**

(72) Inventor : **Kusters, Arnoldus Petrus Maria**
**Vlaamse gaai 11**
**NL-4872 WP Etten-Leur (NL)**
Inventor : **Van Den Hoogen, Bob**
**Heezerspoor w.z. 6**
**NL-3768 MV Soest (NL)**
Inventor : **De Bont, Johannes Marcelis**
**Zuiderbeemd 3**
**NL-4907 EL Oosterhout (NL)**

(74) Representative : **de Bruijn, Leendert C. et al**
**Nederlandsch Octrooibureau**
**Scheveningseweg 82 P.O. Box 29720**
**NL-2502 LS Den Haag (NL)**

(54) **Method for recovering nitrogen from air.**

(57) The invention relates to a method for recovering nitrogen from air by means of passing air at a temperature of below 20°C through a gas separation membrane made of hollow poly-(2,6-dimethyl-p-phenylene oxide) fibres (hollow PPO fibres). More in particular the membrane is constructed of a bundle of asymmetric hollow PPO fibres having a weight-average molecular weight of $10^5$-$5.10^6$, preferably $2.10^5$-$8.10^5$ and a dense top layer of 0.1-5 $\mu$m, advantageously 0.1-1 $\mu$m. Preferably the air has a temperature in the range of 10°C to -40°C, more advantageously in the range of 0°C to -25°C. According to the invention a nitrogen gas is recovered containing 0.1-5 % v/v oxygen. This nitrogen gas can be used in diverse fields such as in the production ferrous and non-ferrous materials.

Fig - 5

The invention relates to a method for recovering nitrogen from air by means of passing air through a gas separation membrane, and to an installation suitable for carrying out a method of this type.

A method of this type is disclosed in the article "Nitrogen Generators based on Membrane Separation Technology", Th. Johannessen et al., pp 207-210. More particularly, air under an elevated pressure of 7-100 bar, for example 30 bar, is first filtered to remove particles larger than 1 µm, such as oil particles and the like, after which the purified air is passed into one or more gas separation modules. A membrane composed of hollow fibres is located in these gas separation modules, the "fast" molecules such as water vapour, helium, carbon dioxide and also oxygen being partially removed from the feed stream via diffusion in said membrane, so that, on the one hand, a product enriched with, inter alia, oxygen (the permeate) and, on the other hand, a nitrogen-enriched product (the retentate) are obtained. The hollow fibres of the membrane are of the composite type, i.e. a two-layer construction, the outer plastic layer controlling the permeation and the inner plastic layer providing the membrane with physical strength. The operating temperature is in the range 0°C - 85°C. However, in this context it is indicated or shown that the efficiency and capacity of the gas separation installation increase appreciably at elevated pressure and elevated temperature.

Surprisingly it has been found that the method defined in the preamble can be carried out advantageously if air at a temperature of below 20°C is passed through hollow PPO fibre membranes and the nitrogen gas obtained as retentate is recovered.

Specifically, it has been found that for hollow PPO fibre membranes the separation factor for oxygen relative to nitrogen increases very sharply if the temperature of the air to be treated is lower.

Preferably, the method according to the invention is carried out at a temperature in the range from 10°C to -40°C and very particularly in the range from 0°C to -25°C.

The advantages of the method according to the invention lie, inter alia, in the improvement in the separation efficiency when the hollow PPO fibre membrane is at low temperature. By virtue of this better separation efficiency, a smaller amount of compressed air, used as starting material, is therefore needed per amount of product, so that the installation requires a smaller compressor, or energy consumption is lower. Moreover, the method according to the invention provides a possibility for obtaining a purer product, that is to say a product richer in nitrogen, at low temperature, under otherwise identical conditions.

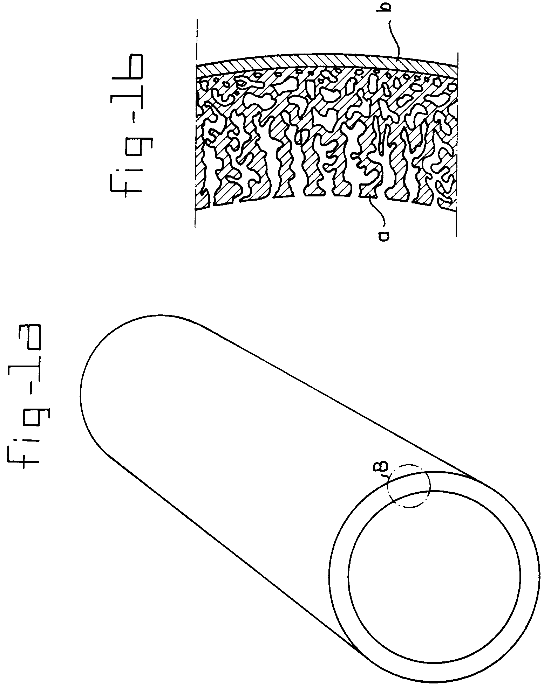

The modules containing hollow PPO fibres to be used in the method according to the invention are, in particular, the modules defined in European patent EP-B 0 298 531, which contain a bundle of asymmetric hollow poly-(2,6-dimethyl-p-phenylene oxide) fibres (hollow PPO fibres) having a weight-average molecular weight $\overline{M}_w$ of $10^5$ - $5.10^6$, preferably $2.10^5$ - $8.10^5$, the asymmetric hollow PPO fibres having a dense top layer 0.1 - 5 µm, advantageously 0.1 - 1 µm, thick. With regard to the abovementioned very thin top layer, it is pointed out for the sake of completeness that it is this layer which effects the actual gas separation. More particularly, a hollow PPO fibre is shown in Fig. 1(a) and a cross-section of part of the porous fibre wall, including top layer, of said hollow fibre is illustrated in Fig. 1(b). In said Fig. 1(b), (a) represents the internal porous inside of the wall and (b) the dense outside of the wall, or top layer. In this context it is pointed out that by modifying the process conditions for the production of hollow PPO fibres it is also possible to apply the dense top layer on the inside of the hollow fibre.

The lowering of the temperature of the air used as starting material, which is required in the case of the method according to the invention, can be effected by any method known to those skilled in the art. For example, the air temperature can be lowered by mechanical cooling, but preferably a liquid coolant such as liquid nitrogen is used. The use of liquid nitrogen is advantageously employed especially in larger installations, since the gaseous nitrogen obtained after the air has cooled can simply be mixed with the end product of the method according to the invention, a product which has a very high nitrogen content being obtained.

With regard to the term "air" it is pointed out that this is used to denote not only "ambient air" but also off-gases which have an appreciable nitrogen content and a low oxygen content, such as, for example, incompletely consumed combustion gases from chemical processes and the like.

The compressor used in the installation according to the invention raises the pressure of the air drawn in, usually to 5-100 bar or even higher. However, compressed air under a pressure of 5-15 bar is advantageously used.

The invention also relates to the nitrogen gas obtained, which then contains only 0.1-5 % v/v $O_2$, advantageously 0.5-2.5 % v/v $O_2$. Said nitrogen gas can be used in diverse fields, such as in the production of ferrous and non-ferrous materials, such as aluminium mouldings, cold-rolled steel and the like.

The invention also comprises installations which are suitable for carrying out the method defined above. Installations of this type comprise a suction line for air, a compressor connected thereto and one or more gas separation modules which are connected downstream and contain a membrane based on hollow PPO fibres, the final module being provided with a discharge line for the nitrogen gas obtained, and are characterised in that the installations are provided with a cooling device, at least upstream of the final gas separation module.

Said cooling device preferably contains liquid nitrogen, or is a mechanical cooler.

LEGEND

Fig. 1(a) :     this figure shows, diagrammatically, an asymmetric hollow PPO fibre.

Fig. 1(b) :     this figure shows a diagrammatic cross-section of a section of the wall of an asymmetric hollow PPO fibre, (a) representing the inner porous side of the wall and (b) the thin, dense outside of the wall, or top layer.

Fig. 2 :     this figure shows an installation suitable for carrying out the method according to the invention, (1) representing a compressor, (2) and (3) filters for removal of liquid water, dust and oil particles, (4), (5), (6) and (7) gas separation modules, (8) a tank containing liquid $N_2$ and (9) a heat exchanger.

Fig. 3 :     this figure shows a gas separation module which contains hollow PPO fibres (10). The gas separation module is provided with an inlet (11), an outlet (12) for the retentate and an outlet (13) for the permeate.

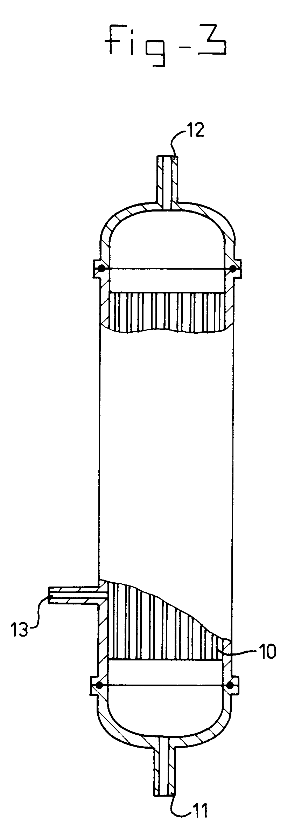

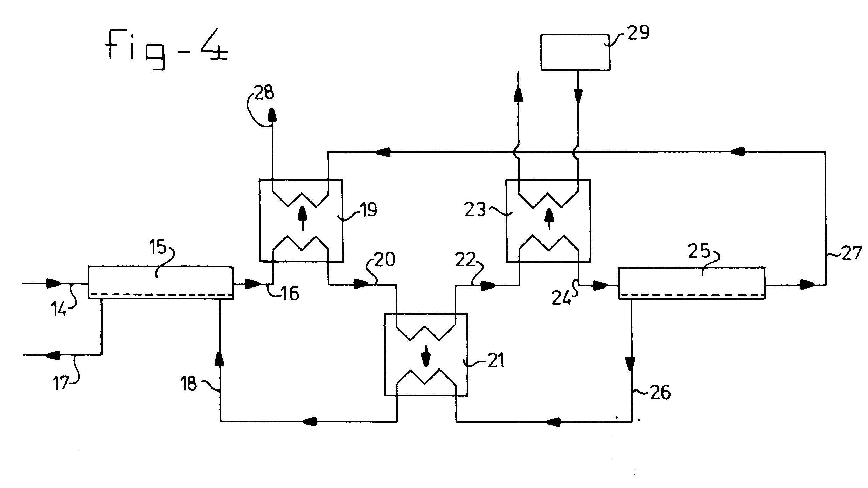

Fig. 4 :     this figure shows another installation suitable for carrying out the method according to the invention, where (14) represents the feed line for compressed air, (15) the first gas separation module, (16) the retentate line of this module, (17) the permeate line of this module, which line is connected to a line (18), (19) a heat exchanger, (20) the discharge line from heat exchanger (19), which leads to heat exchanger (21), (22) the discharge line from heat exchanger (21), which leads to heat exchanger (23), and (24) the discharge line from heat exchanger (23), which leads to a second gas separation module (25), (26) is the permeate line from the second module, which is fed to heat exchanger (21), (27) is the retentate line from the second module, which is fed to heat exchanger (19), (28) represents the discharge line for the gas obtained and (29) represents the tank containing liquid nitrogen, which is connected to heat exchanger (23).

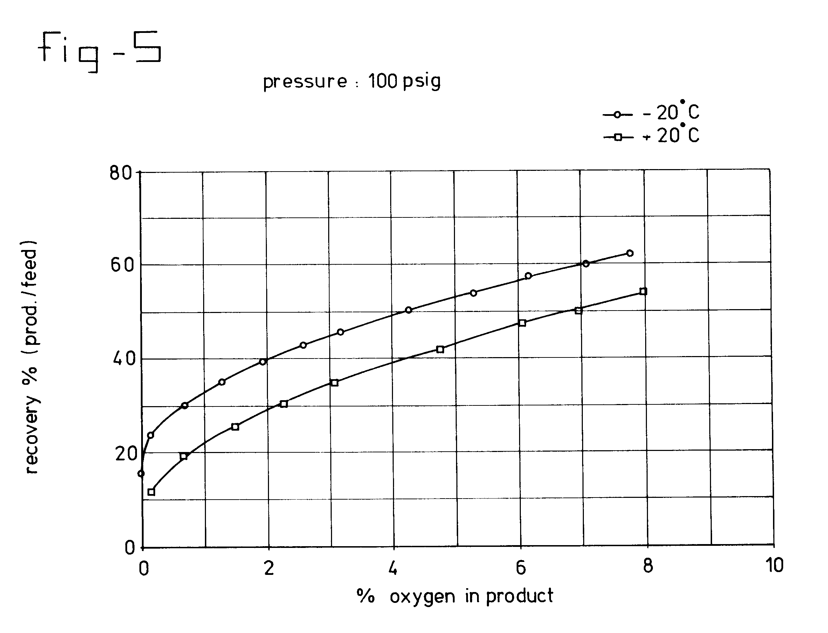

Fig. 5 :     this figure shows a graph of the results of the trials at +20°C and -20°C carried out in illustrative embodiment I.

Two illustrative embodiments of the method according to the invention, which must not be regarded as implying any limitation, are given below.

Illustrative embodiment I

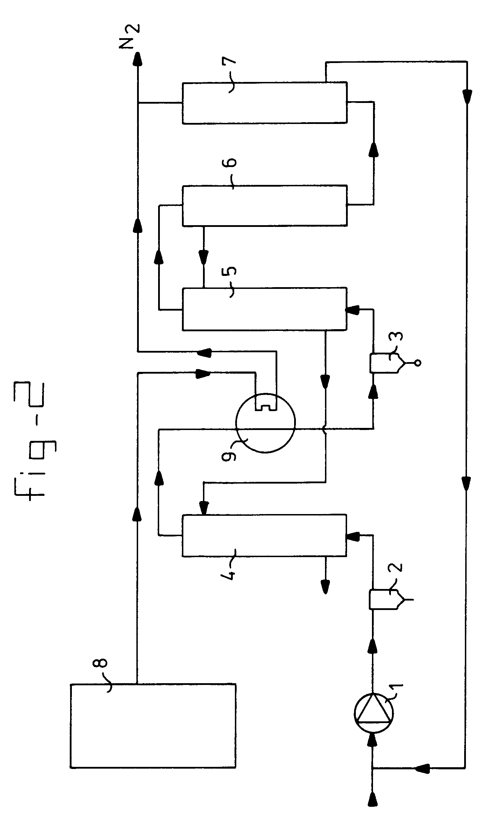

In this illustrative embodiment the installation illustrated in Fig. 2 was used. In this case the compressor (1) (power rating 0.5 kW) drew in ambient air at 20°C and the permeate from gas separation module (7) in a ratio of 3:1. This permeate had a lower oxygen content (15 % v/v) than the ambient air and thus lowered the percentage oxygen content of the mixture drawn in. Purification of the gas mixture, which was compressed to 8 bar, was then effected by means of filter (2) by removal of liquid water, oil and dust particles. The compressed gas mixture flowed into the hollow fibres of gas separation module (4) (see also Fig. 3). Said module (4) contained an ADU membrane (Aqua-tech. Environmental, Bend (OR), USA), which was highly selective for water vapour, that is to say it very readily allowed the passage of water vapour but was barely permeable to oxygen and nitrogen. The permeate from both module (5) and module (6) was fed to the low pressure side (permeate side) of said membrane. Said permeate took up the water vapour which permeated through the membrane of module (4).

A gas mixture (air) having a low moisture content was obtained as retentate from module (2) and was cooled to -20°C in heat exchanger (9) using liquid nitrogen emanating from tank (8). The cooled gas mixture (air) was then passed into a second filter to remove the condensed water vapour. The gas mixture treated in filter (3) was fed via said filter to gas separation module (5), which module contained a membrane which had a separation surface area of 5 m² and was based on asymmetric hollow PPO fibres having a $\overline{M}_w$ of 6.10⁵ and a dense top layer 0.2 μm thick. The retentate from module (5) was fed into a gas separation module (6), which module likewise contained a membrane which had a total separation surface area of 5 m² and was based on asymmetric hollow PPO fibres having a $\overline{M}_w$ of 6.10⁵ and a dense top layer 0.2 μm thick. The permeate from module (6) was, as already stated, fed to the permeate side of module (5) and then to the permeate side of module (2). The retentate from module (6) was then fed into gas separation module (7), which module likewise contained a membrane which had a separation surface area of 5 m² and was based on asymmetric hollow PPO fibres having a $\overline{M}_w$ of 6.10⁵ and a dense top layer 0.2 μm thick. The retentate from module (7) was finally discharged, together with the nitrogen gas obtained from heat exchanger (9), as end product, and the permeate was, as stated above, fed to compressor (1).

In order to illustrate the favourable results of the invention, the above experiment was repeated, but in this case without cooling the gas mixture from +20°C to -20°C. The results are given in Tables A and B below; recovery is taken to be the value of the quotient

$$\text{recovery} = \frac{\text{nitrogen gas produced}}{\text{air taken in}}.$$

TABLE A

| Temperatire +20°C (7 barg) | | | |
|---|---|---|---|
| Retentate (Nm³/h) | Permeate (Nm³/h) | Recovery (%) | %O₂ |
| .33 | 2.5 | 11.6 | .15 |
| .62 | 2.6 | 19.2 | .7 |
| .90 | 2.7 | 25.4 | 1.5 |
| 1.2 | 2.7 | 30.6 | 2.3 |
| 1.5 | 2.7 | 35.0 | 3.1 |
| 2.0 | 2.8 | 42.0 | 4.8 |
| 2.6 | 2.9 | 47.7 | 6.1 |
| 2.9 | 2.9 | 50.2 | 7 |
| 3.5 | 2.9 | 54.2 | 8 |

TABLE B

| Temperature +20°C (7 barg) | | | |
|---|---|---|---|
| Retentate (Nm³/h) | Permeate (Nm³/h) | Recovery (%) | %O₂ |
| 0.2 | 0.96 | 15.6 | .0 |
| 0.3 | 0.98 | 23.7 | .15 |
| 0.4 | 1.0 | 29.9 | .7 |
| 0.6 | 1.0 | 35.0 | 1.3 |
| 0.7 | 1.1 | 39.4 | 1.95 |
| 0.8 | 1.1 | 42.9 | 2.6 |
| 0.9 | 1.1 | 45.6 | 3.2 |
| 1.1 | 1.1 | 50.4 | 4.3 |
| 1.4 | 1.2 | 54.0 | 5.3 |
| 1.6 | 1.2 | 57.5 | 6.15 |
| 1.8 | 1.2 | 60.2 | 7.1 |
| 2.02 | 1.2 | 62.5 | 7.8 |

Illustrative embodiment II

In this illustrative embodiment the installation illustrated in Fig. 4 was used. Compressed air (200 l/min) under a pressure of 8 bar and at a temperature of 5°C flowed via line (14) into a first gas separation module (15), which contained a membrane which had a separation surface area of 12 m² and was based on asymmetric hollow PPO fibres having a $\overline{M}_w$ of 6.10⁵ and a dense top layer 0.2 μm thick. This module separated the compressed air into an oxygen-rich stream (17), to which stream (18) was added, and a low-oxygen stream (16). Said stream (16) left the module (15) at a lower temperature, since said stream was cooled, via module (15), which also acted as a heat exchanger, by stream (18). Moreover, the low-oxygen stream (16) was dried. Module (15) therefore has three functions, i.e.:

(a) cooling of the stream of compressed air,

(b) removal of water vapour from the stream of compressed air, and

(c) removal of (some of) the oxygen from the stream of compressed air.

Stream (16) was then further cooled in heat exchanger (19) by means of stream (27), which was at a temperature of about -20°C. The stream (20) obtained from this heat exchanger was then cooled in heat exchanger (21) by means of stream (26), which also was at a temperature of -20°C. The heat exchange sequence was deliberately chosen in order to warm up the end product (28) as far as possible, whilst stream (18) was used to cool down stream (14) in module (15).

Air stream (22) was then cooled by means of liquid nitrogen in heat exchanger (23) in such a way that stream (24) had a temperature of about -20°C, after which said stream was fed into gas separation module (25), which module contained a membrane which had a separation surface area of 12 m$^2$ and was based on asymmetric hollow PPO fibres having a $\overline{M}_w$ of 6.10$^5$ and a dense top layer 0.2 $\mu$m thick. The 70 l/min retentate stream (27) from said module (25) had an oxygen content of 0.5 % v/v O$_2$. The permeate stream (26) from module (25) was fed to heat exchanger (21) to cool air stream (20).

## Claims

1. Method for recovering nitrogen from air by means of passing air through a gas separation membrane, characterised in that air at a temperature of below 20°C is passed through hollow PPO fibre membranes and the nitrogen gas obtained as retentate is recovered.

2. Method according to Claim 1, characterised in that the method is carried out at a temperature of 10°C to -40°C.

3. Method according to Claim 2, characterised in that the method is carried out at a temperature of 0°C to -25°C.

4. Method according to one or more of Claims 1-3, characterised in that cooling of the air is carried out in, for example, liquid N$_2$.

5. Method according to one or more of Claims 1-3, characterised in that cooling of the air is carried out with the aid of a mechanical cooling apparatus.

6. Method according to one or more of Claims 1-5, characterised in that air under a pressure of 5-100 bar is used.

7. Method according to Claim 6, characterised in that air under a pressure of 5-15 bar is used.

8. Method according to one or more of Claims 1-7, characterised in that nitrogen gas containing 0.1 - 5 % v/v oxygen is recovered.

9. Method according to Claim 8, characterised in that nitrogen gas containing 0.5 - 2.5 % v/v oxygen is recovered.

10. Installation, suitable for recovering nitrogen from air, comprising a suction line for air, a compressor connected thereto and one or more separation modules, the final module being provided with a discharge line for the nitrogen gas, characterised in that the installation is provided with a cooling device, at least upstream of the final gas separation module comprising a hollow PPO fibre membrane.

11. Installation according to Claim 10, characterised in that the cooling device contains liquid N$_2$.

12. Installation according to Claim 10, characterised in that the cooling device is a mechanical cooler.

Fig-1b

Fig-1a

Fig-2

# Fig-3

Fig-4

EP 0 586 018 A1

fig-5

pressure : 100 psig

—o— -20°C
—□— +20°C

recovery % ( prod. / feed )

% oxygen in product

EP 0 586 018 A1

European Patent Office

**EUROPEAN SEARCH REPORT**

Application Number

EP 93 20 2571

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | WO-A-92 13628 (THE DOW CHEMICAL COMP.)<br>* page 10, line 38 - page 11, line 24 *<br>* page 13, line 1 - line 31 *<br>* page 29, line 14 - page 32, line 22;<br>claims 1-19; figures 1-16 *<br>--- | 1-12 | B01D53/22<br>B01D71/52 |
| A | US-A-3 735 558 (SKARSTROM ET AL.)<br><br>* column 10, line 65 - column 11, line 5 *<br>* column 11, line 16 - line 32 *<br>* column 12, line 32 - line 44 *<br>--- | 1-3,6,7,<br>10 | |
| A | EP-A-0 082 600 (THE GARRETT CORP.)<br><br>* page 5, line 25 - page 8, line 27;<br>figures 1-3 *<br>----- | 1,5,10,<br>12 | |
| | | | TECHNICAL FIELDS SEARCHED (Int.Cl.5)<br><br>B01D |

The present search report has been drawn up for all claims

| Place of search | Date of completion of the search | Examiner |
|---|---|---|
| THE HAGUE | 14 December 1993 | Eijkenboom, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                 
& : member of the same patent family, corresponding document

EPO FORM 1503 03.82 (P04C01)